(19) Europäisches Patentamt
European Patent Office
Office européen des brevets

(11) EP 3 475 321 B1

(12) # EUROPÄISCHE PATENTSCHRIFT

(45) Veröffentlichungstag und Bekanntmachung des Hinweises auf die Patenterteilung:
**26.02.2020 Patentblatt 2020/09**

(21) Anmeldenummer: **17728568.1**

(22) Anmeldetag: **09.06.2017**

(51) Int Cl.:
***C08F 8/30*** *(2006.01)* ***C08F 8/12*** *(2006.01)*
***C08F 212/00*** *(2006.01)* ***B01J 41/14*** *(2006.01)*
***C08F 212/08*** *(2006.01)* ***C08F 212/36*** *(2006.01)*
***C08F 212/12*** *(2006.01)* ***C08J 9/28*** *(2006.01)*
*B01J 41/07* *(2017.01)*

(86) Internationale Anmeldenummer:
**PCT/EP2017/064068**

(87) Internationale Veröffentlichungsnummer:
**WO 2017/220342 (28.12.2017 Gazette 2017/52)**

(54) **VERFAHREN ZUR HERSTELLUNG VON AMINOMETHYLIERTEN PERLPOLYMERISATEN**
METHOD FOR THE PRODUCTION OF AMINOMETHYLATED BEAD POLYMERS
PROCÉDÉ DE PRÉPARATION DE POLYMÈRES AMINOMÉTHYLÉS EN FORME DE PERLES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.06.2016 EP 16175637**
**23.06.2016 EP 16175863**

(43) Veröffentlichungstag der Anmeldung:
**01.05.2019 Patentblatt 2019/18**

(73) Patentinhaber: **Lanxess Deutschland GmbH**
**50569 Köln (DE)**

(72) Erfinder:
- **KOOP, Bernd**
**50668 Köln (DE)**
- **REZKALLAH, Areski**
**51427 Bergisch Gladbach (DE)**
- **MARTIN, Georg**
**40764 Langenfeld (DE)**
- **VANHOORNE, Pierre**
**40789 Monheim (DE)**
- **KLIPPER, Reinhold**
**50933 Köln (DE)**
- **BALJAK, Sladjana**
**20535 Hamburg (DE)**

(56) Entgegenhaltungen:
**EP-A1- 3 012 272 WO-A1-2016/102491**
**US-A- 4 232 125**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 475 321 B1

## Beschreibung

Die Erfindung betrifft ein Verfahren zur Herstellung von aminomethylierten Perlpolymerisaten unter Verwendung von kondensierten Formaldehyden und Carbonsäurehalogeniden.

Ein gängiges Verfahren zur Herstellung von aminomethylierten Perlpolymerisaten, bei dem Phthalimid und Formaldehyd in Gegenwart eines halogenierten Lösungsmittels und in Gegenwart von Schwefelsäure zum Bis(phthalimidomethyl)ether umgesetzt werden und dieses dann in Gegenwart von Oleum und dem Perlpolymerisat zunächst zum amidomethylierten Perlpolymerisat und dann durch Hydrolyse zum aminomethylierten Perlpolymerisat umgesetzt wird, sind z.B. aus der EP 1078688 und der US-B 4952608 bekannt.

Nachteilig an diesem Verfahren ist, dass hohe Mengen an chlorierten Quellungsmitteln eingesetzt werden müssen. Das Verfahren ist daher insbesondere ökologisch problematisch.

Ein weiteres Verfahren zur Herstellung von aminomethylierten Perlpolymerisaten ist aus der US-A 4232125 bekannt, bei dem Phthalimid und Paraformaldehyd und das Perlpolymerisat in Gegenwart eines Quellungsmittels zusammen mit Schwefelsäure als Friedel-Crafts Katalysator in einer Eintopfreaktion zum phthalimidomethylierten Perlpolymerisat umgesetzt werden. Das phthalimidomethylierte Perlpolymerisat wird dann alkalisch zum aminomethylierten Perlpolymerisat hydrolysiert.

Aus der US-B 3989650 ist ein Verfahren zur Herstellung von aminomethylierten Perlpolymerisaten bekannt, bei dem N-Hydroxyalkylimide oder N-Hydroxyalkylamide mit Carbonsäurenanhydriden zu deren Estern umgesetzt werden und dann das Perlpolymerisat in Gegenwart eines Quellungsmittels und eines Friedel-Crafts Katalysators amidomethyliert wird. N-Hydroxyalkylimide werden üblicherweise durch Umsetzung von z.B. Phthalimid mit Formaldehyd hergestellt und dann isoliert. Das amidomethylierte Perlpolymerisat wird dann alkalisch zum aminomethylierten Perlpolymerisat hydrolysiert.

Nachteilig an diesen Verfahren ist, dass entweder ebenfalls zusätzlich große Mengen an Quellungsmitteln eingesetzt werden müssen oder/und dass der Funktionalisierungsgrad nicht zufriedenstellend ist.

Es bestand daher ein Bedürfnis nach einem Verfahren zur Herstellung von aminomethylierten Perlpolymerisaten mit dem die Nachteile des Standes der Technik überwunden werden können.
Überraschend wurde gefunden, dass in Gegenwart von aliphatischen, gesättigten oder ungesättigten Carbonsäurehalogeniden und gegebenenfalls in Gegenwart von zusätzlichen aliphatischen, gesättigten oder ungesättigten Carbonsäuren, amidomethylierte Perlpolymerisate in hohen Ausbeuten hergestellt werden können. Dabei kann weitestgehend auf den Einsatz chlorierter, organischer Lösungsmittel verzichtet werden.
Gegenstand der Erfindung ist daher ein Verfahren zur Herstellung von aminomethylierten Perlpolymerisaten, dadurch gekennzeichnet, dass

a) Monomertröpfchen aus einem Gemisch enthaltend mindestens eine monovinylaromatische Verbindung, mindestens eine polyvinylaromatische Verbindung, mindestens einen Initiator zu einem Perlpolymerisat umgesetzt werden und

b) das Perlpolymerisat aus Schritt a) mit mindestens einer Verbindung der Formel (I) oder deren Salze

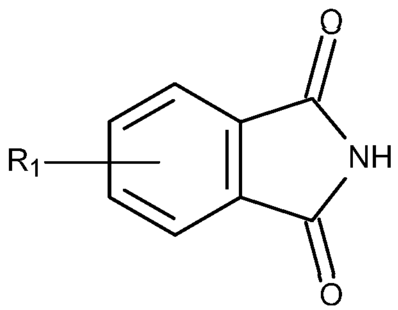

(I)

wobei $R_1$ = $C_1$-$C_3$-Alkyl oder H bedeutet und mit mindestens einer Verbindung der Formel (II) oder deren zyklischen Kondensate

$$HO-[CH_2-O]_n-H \quad (II)$$

wobei n = 2 bis 100 ist,
in Gegenwart von zumindest einem aliphatischen, gesättigten oder ungesättigten Carbonsäurehalogenid und in

Gegenwart von zusätzlichen aliphatischen, gesättigten oder ungesättigten Carbonsäuren und
in Gegenwart von zumindest einem Friedel-Crafts Katalysator, wobei die eingesetzten Mengen der Verbindungen der Formel (I), der Verbindungen der Formel (II), des Perlpolymerisats, der aliphatischen, gesättigten oder ungesättigten Carbonsäurenhalogenide, der Friedel-Crafts Katalysatoren und der Carbonsäuren zusammen in einer Menge größer als 96 Gew.-% in der Reaktionsmischung bezogen auf die Gesamtmenge der Reaktionsmischung vorliegen,
zu einem phthalimidomethylierten Perlpolymerisat umgesetzt wird und
c) das phthalimidomethylierte Perlpolymerisat aus Schritt b.) zu einem aminomethylierten Perlpolymerisat hydrolysiert wird.

$R_1$ stellt bevorzugt H dar. Falls $R_1$ = H ist, dann ist die Verbindung der Formel (I) Phthalimid. Verbindungen der Formel (I) sind bevorzugt Phthalimid und dessen Salze oder Säureadditionsverbindungen. Als Säureadditionsverbindungen können z.B. die Addukte mit Salzsäure oder Schwefelsäure verstanden werden.
Bevorzugt ist n = 2 bis 30. Besonders bevorzugt ist n = 8 bis 30.
Die Verbindungen der Formel (II) können linear sein oder aber auch zyklische Kondensate des Formaldehyds, also z.B. auch Trioxan, darstellen.Bevorzugt werden als Verbindungen der Formel (II) Paraformaldehyd oder Trioxan oder Gemische dieser Verbindungen eingesetzt. Besonders bevorzugt sind die Verbindungen der Formel (II) Paraformaldehyd.
Als Carbonsäurehalogenide können in Verfahrensschritt b) beispielsweise und vorzugsweise aliphatische, gesättigte oder ungesättigte Mono- , Di- oder Tricarbonsäurehalogenide, die bei Temperaturen zwischen 10 °C und 60 °C flüssig sind, wie z.B. Bernsteinsäuredichlorid, Oxalsäuredichlorid, Adipinsäuredichlorid, Maleinsäuredichlorid, Essigsäuresäurechlorid, Buttersäurechlorid, Propionsäurechlorid, Hexansäurechlorid, Pentansäurechlorid und deren Isomere, wie z.B. Valeriansäurechlorid, Isovaleriansäurechlorid, 2-Methylbuttersäurechlorid, Pivalinsäurechlorid, Malonsäurechlorid, Fumarsäurechlorid, Bernsteinsäuredibromid, Oxalsäuredibromid, Adipinsäuredibromid, Fumarsäurebromid, Maleinsäuredibromid, Essigsäuresäurebromid, Buttersäurebromid, Propionsäurebromid, Hexansäurebromid, Pentansäurebromid, Isovaleriansäurebromid, Malonsäurebromid, 2-Methylbuttersäurebromid oder Pivalinsäurebromid eingesetzt werden. Besonders bevorzugt werden in Verfahrensschritt b) als Carbonsäurehalogenide aliphatische und gesättigte Monocarbonsäurechloride oder/und -bromide eingesetzt, insbesondere Monocarbonsäurechloride oder/und -bromide, die bei Temperaturen zwischen 10 °C und 60 °C flüssig sind. Ganz besonders bevorzugt werden Essigsäurechlorid oder Pentansäurechlorid und deren Isomere Valeriansäurechlorid, Isovaleriansäurechlorid, 2-Methylbuttersäurechlorid oder Pivalinsäurechlorid eingesetzt. Noch weiter bevorzugt wird Essigsäurechlorid eingesetzt.

In Verfahrensschritt b.) werden auch weitere aliphatische, gesättigte oder ungesättigte Mono-, Di- oder Tricarbonsäuren eingesetzt. Bevorzugt werden
Mischungen aus aliphatischen, gesättigten oder ungesättigten Mono-, Di- oder Tricarbonsäuren und aliphatischen, gesättigten oder ungesättigten Mono- , Di- oder Tricarbonsäurehalogeniden eingesetzt.
Als Carbonsäuren können in Verfahrensschritt b) z.B. und vorzugsweise flüssige, gesättigte oder ungesättigte Mono-, Di- oder Tricarbonsäuren, die bei Temperaturen zwischen 10 °C und 120 °C flüssig sind, wie z.B. Ameisensäure, Essigsäure, Buttersäure, Propansäure, Hexansäure oder Heptansäure eingesetzt werden.

Die Carbonsäurehalogenide und die korrespondierenden Carbonsäuren werden in Gemischen eingesetzt, d.h. z.B. Valeriansäurechlorid mit Valeriansäure oder Essigsäurechlorid mit Essigsäure. Besonders bevorzugt werden als Carbonsäuren in Verfahrensschritt b) aliphatische und gesättigte Monocarbonsäuren eingesetzt, die bei Temperaturen zwischen 10°C und 120°C flüssig sind. Ganz besonders bevorzugt wird Essigsäurechlorid mit Essigsäure als Gemisch eingesetzt. Beim Einsatz von Gemische aus Carbonsäurehalogenid und Carbonsäure, liegt das Stoffmengenverhältnis Carbonsäurehalogenid zu Carbonsäure im Allgemeinen zwischen 100 : 1 bis 1 : 100. Bevorzugt liegt das Stoffmengenverhältnis Carbonsäurehalogenid zu Carbonsäure zwischen 10 : 1 bis 1 : 100. Besonders bevorzugt liegt das Stoffmengenverhältnis zwischen Carbonsäurehalogenide zu Carbonsäure zwischen 10 : 1 und 1 : 10. Noch weiter bevorzugt liegt das Stoffmengenverhältnis zwischen Carbonsäurehalogenid zu Carbonsäure (z.B. bei einer Mischung aus Essigsäurechlorid und Essigsäure) zwischen 1 : 1 und 1 : 10.
Als Friedel-Crafts-Katalysator können in Verfahrensschritt b) vorzugsweise starke anorganische oder organische Protonensäuren oder Lewis-Säuren wie z.B. Zinkchlorid, Aluminiumchlorid, Zinntetrachlorid, Eisen(III)chlorid, Eisen(III)bromid oder weitere Eisen(III)salze oder Gemische dieser Verbindungen eingesetzt werden. Als Friedel-Crafts-Katalysator werden beispielsweise und vorzugsweise aliphatische oder aromatische Methan-, Benzol,- und Toluolsulfonsäuren, Salzsäure, Schwefelsäure, Oleum, Salpetersäure oder Phosphorsäure oder Gemische dieser Säuren eingesetzt. Als organische Protonensäuren können z.B. aliphatische oder aromatische Methan-, Benzol,- und Toluolsulfonsäuren oder Fluorsulfonsäure eingesetzt werden. Bevorzugt wird als Friedel-Crafts Katalysator Schwefelsäure eingesetzt.

Der Rahmen der Erfindung umfasst alle oben stehenden und im Folgenden aufgeführten, allgemeinen oder in Vorzugsbereichen genannten Restedefinitionen, Parameter und Erläuterungen untereinander, also auch zwischen den jeweiligen Bereichen und Vorzugsbereichen in beliebiger Kombination.
In Verfahrensschritt a) wird wenigstens eine monovinylaromatische Verbindung und wenigstens eine polyvinylaromatische Verbindung eingesetzt. Es ist jedoch auch möglich, Mischungen zweier oder mehrerer monovinylaromatischer Verbindungen und Mischungen zweier oder mehrerer polyvinylaromatischer Verbindungen einzusetzen.
Als monovinylaromatische Verbindungen im Sinne der vorliegenden Erfindung werden in Verfahrensschritt a) bevorzugt Styrol, Vinyltoluol, Ethylstyrol, $\alpha$-Methylstyrol, Chlorstyrol, Bromstyrol, t-Butylstyrol, Vinylnaphthalin oder Chlormethylstyrol oder Mischungen dieser Verbindungen eingesetzt.
Insbesondere bevorzugt wird Styrol oder Mischungen aus Styrol mit den vorgenannten Monomeren, bevorzugt mit Ethylstyrol, eingesetzt.
Bevorzugte polyvinylaromatische Verbindungen im Sinne der vorliegenden Erfindung sind für Verfahrensschritt a) Divinylbenzol, Divinyltoluol oder Trivinylbenzol oder Mischungen dieser Verbindungen, Divinylnaphtalin, oder Trivinylnaphtalin, insbesondere bevorzugt Divinylbenzol.
Die polyvinylaromatischen Verbindungen werden bevorzugt in Mengen von 1-20 Gew.-%, besonders bevorzugt 2-12 Gew.-%, insbesondere bevorzugt 4-10 Gew.-%, bezogen auf das Monomer oder dessen Mischung mit weiteren Monomeren eingesetzt. Die Art der polyvinylaromatischen Verbindungen (Vernetzer) wird im Hinblick auf die spätere Verwendung des Perlpolymerisats ausgewählt. Im Falle des Einsatzes von Divinylbenzol sind kommerzielle Divinylbenzolqualitäten, die neben den Isomeren des Divinylbenzols auch Ethylvinylbenzol enthalten, ausreichend.
Der Begriff Perlpolymerisat stellt im Sinne der Erfindung ein kugelförmiges, vernetztes Polymerisat dar.
Die Begriffe mikroporös oder gelförmig bzw. makroporös sind in der Fachliteratur bereits eingehend beschrieben worden.
Die Ausbildung makroporöser Perlpolymerisate erfolgt vorzugsweise durch Zusatz von Inertmaterialien, bevorzugt wenigstens einem Porogens, zu der Monomermischung bei der Polymerisation, um im Perlpolymerisat eine makroporöse Struktur zu erzeugen. Insbesonders bevorzugte Porogene sind Hexan, Octan, Isooctan, Isododecan, Methylethylketon, Butanol oder Octanol und deren Isomeren. Es sind vor allem organische Substanzen geeignet, die sich im Monomeren lösen, das Perlpolymerisat aber schlecht lösen bzw. quellen (Fällmittel für Polymere) beispielsweise aliphatische Kohlenwasserstoffe (Farbenfabriken Bayer DBP 1045102 , 1957; DBP 1113570, 1957).

In US 4382124 werden als Porogen die ebenfalls im Rahmen der vorliegenden Erfindung bevorzugt einzusetzende Alkohole mit 4 bis 10 Kohlenstoffatomen zur Herstellung monodisperser, makroporöser Perlpolymerisate auf Styrol/Divinylbenzol-Basis eingesetzt. Ferner wird eine Übersicht der Herstellmethoden makroporöser Perlpolymerisate gegeben.

Bevorzugt wird in Verfahrensschritt a) mindestens ein Porogen zugesetzt. Bevorzugt weisen die aminomethylierten Perlpolymerisate eine makroporöse Struktur auf.

Die gemäß Verfahrensschritt a) hergestellten Perlpolymerisate können in heterodisperser oder monodisperser Form hergestellt werden.

Die Herstellung heterodisperser Perlpolymerisate geschieht nach allgemeinen, dem Fachmann bekannten Verfahren, z.B. mit Hilfe der Suspensionspolymerisation.

Bevorzugt werden monodisperse Perlpolymerisate in Verfahrensschritt a) hergestellt.

Als monodispers werden in der vorliegenden Anmeldung solche Stoffe bezeichnet, bei dem mindestens 90 Volumen- oder Massen-% der Teilchen einen Durchmesser besitzen, der in dem Intervall mit der Breite von + 10 % des häufigsten Durchmessers um den häufigsten Durchmesser herum liegt.

Zum Beispiel bei einem Stoff mit häufigstem Durchmesser von 0,5 mm liegen mindestens 90-Volumen- oder Massen-% in einem Größenintervall zwischen 0,45 mm und 0,55 mm, bei einem Stoff mit häufigstem Durchmesser von 0,7 mm liegen mindestens 90 Volumen- oder Massen-% in einem Größenintervall zwischen 0,77 mm und 0,63 mm.

In einer bevorzugten Ausführungsform der vorliegenden Erfindung kommen in Verfahrensschritt a) mikroverkapselte Monomertröpfchen bei der Herstellung von monodispersen Perlpolymerisaten zum Einsatz.

Für die Mikroverkapselung der Monomertröpfchen kommen die für den Einsatz als Komplexkoazervate bekannten Materialien in Frage, insbesondere Polyester, natürliche und synthetische Polyamide, Polyurethane oder Polyharnstoffe.

Als natürliches Polyamid wird bevorzugt Gelatine eingesetzt. Diese kommt insbesondere als Koazervat und Komplexkoazervat zur Anwendung. Unter gelatinehaltigen Komplexkoazervaten im Sinne der Erfindung werden vor allem Kombinationen von Gelatine mit synthetischen Polyelektrolyten verstanden. Geeignete synthetische Polyelektrolyte sind Copolymerisate mit eingebauten Einheiten von beispielsweise Maleinsäure, Acrylsäure, Methacrylsäure, Acrylamid und Methacrylamid. Besonders bevorzugt werden Acrylsäure und Acrylamid eingesetzt. Gelatinehaltige Kapseln können mit üblichen Härtungsmitteln wie beispielsweise Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben. Die Methoden der Verkapselung mit synthetischen Polymeren sind bekannt. Bevorzugt ist die Phasengrenzflächenkondensation, bei der eine im Monomertröpfchen gelöste Reaktivkomponente (insbesondere ein Isocyanat oder ein Säurechlorid) mit einer zweiten, in der wässrigen Phase gelösten Reaktivkomponente (insbesondere einem Amin), zur Reaktion gebracht wird.
Die heterodispersen oder gegebenenfalls mikroverkapselten, monodispersen Monomertröpfchen enthalten wenigstens einen Initiator oder Mischungen von Initiatoren (Initiatorkombination) zur Auslösung der Polymerisation. Für das erfindungsgemäße Verfahren bevorzugte Initiatoren sind Peroxyverbindungen, insbesondere bevorzugt Dibenzoylperoxid, Dilauroylperoxid, Bis(p-chlorbenzoyl)peroxid, Dicyclohexylperoxydicarbonat, tert.-Butylperoctoat, tert.-Butylperoxy-2-ethyl-hexanoat, 2,5-Bis(2-ethyl-hexanoylperoxy)-2,5-dimethylhexan oder tert.-Amylperoxy-2-etylhexan, sowie Azoverbindungen wie 2,2'-Azobis(isobutyronitril) oder 2,2'-Azobis(2-methylisobutyronitril).

Die Initiatoren werden bevorzugt in Mengen von 0,05 bis 2,5 Gew.-%, besonders bevorzugt 0,1 bis 1,5 Gew.-%, bezogen auf die Monomeren-Mischung, angewendet.

Das gegebenenfalls monodisperse, mikroverkapselte Monomertröpfchen kann gegebenenfalls auch bis zu 30 Gew.-% (bezogen auf das Monomer) vernetztes oder unvernetztes Polymer enthalten. Bevorzugte Polymere leiten sich aus den vorgenannten Monomeren, besonders bevorzugt von Styrol, ab.

Bei der Herstellung von monodispersen Perlpolymerisaten in Verfahrensschritt a) kann die wässrige Phase in einer weiteren bevorzugten Ausführungsform einen gelösten Polymerisationsinhibitor enthalten. Als Inhibitoren kommen in diesem Fall sowohl anorganische als auch organische Stoffe in Frage. Bevorzugte anorganische Inhibitoren sind Stickstoffverbindungen, insbesondere bevorzugt Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere bevorzugte organische Inhibitoren sind stickstoffhaltige Verbindungen. Insbesondere bevorzugt sind Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors beträgt 5 - 1000 ppm (bezogen auf die wässrige Phase), vorzugsweise 10 - 500 ppm, besonders bevorzugt 10 - 250 ppm.

Die Polymerisation der gegebenenfalls mikroverkapselten monodispersen, Monomertröpfchen zum monodispersen Perlpolymerisat erfolgt, wie bereits oben erwähnt, gegebenenfalls bzw. bevorzugt in Anwesenheit eines oder mehrerer Schutzkolloide in der wässrigen Phase. Als Schutzkolloide eignen sich natürliche oder synthetische wasserlösliche Polymere, bevorzugt Gelatine, Stärke, Polyvinylalkohol, Polyvinylpyrrolidon, Polyacrylsäure, Polymethacrylsäure oder Copolymerisate aus (Meth)acrylsäure und (Meth)acrylsäureestern. Bevorzugt sind ferner Cellulosederivate, insbesondere Celluloseester und Celluloseether, wie Carboxymethylcellulose Methylhydroxyethylcellulose, Methylhydroxypropylcellulose und Hydroxyethylcellulose. Insbesondere bevorzugt ist Gelatine. Die Einsatzmenge der Schutzkolloide beträgt im allgemeinen 0,05 bis 1 Gew.-% bezogen auf die wässrige Phase, vorzugsweise 0,05 bis 0,5 Gew.-%.

Die Polymerisation zum monodispersen Perlpolymerisat kann in einer alternativen bevorzugten Ausführungsform in Anwesenheit eines Puffersystems durchgeführt werden. Bevorzugt werden Puffersysteme, die den pH-Wert der wässrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflusst. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration des Phosphats bzw. Borat in der wässrigen Phase beträgt im Allgemeinen 0,5-500 mmol/l, insbesondere 2,5 - 100 mmol/l.

Die Rührgeschwindigkeit bei der Polymerisation zum monodispersen Perlpolymerisat ist weniger kritisch und hat im Gegensatz zur herkömmlichen Perlpolymerisation keinen Einfluss auf die Teilchengröße. Es werden niedrige Rührgeschwindigkeiten angewandt, die ausreichen, die suspendierten Monomertröpfchen in Schwebe zu halten und die Abführung der Polymerisationswärme zu unterstützen. Für diese Aufgabe können verschiedene Rührertypen eingesetzt werden. Besonders geeignet sind Gitterrührer mit axialer Wirkung.

Das Volumenverhältnis von verkapselten Monomertröpfchen zu wässriger Phase beträgt 1 : 0,75 bis 1 : 20, vorzugsweise 1 : 1 bis 1 : 6.

Die Polymerisationstemperatur zum monodispersen Perlpolymerisat richtet sich nach der Zerfallstemperatur des eingesetzten Initiators. Sie liegt im Allgemeinen zwischen 50 bis 180°C, vorzugsweise zwischen 55 und 130°C. Die Polymerisation dauert 0,5 bis etwa 20 Stunden. Es hat sich bewährt, ein Temperaturprogramm anzuwenden, bei dem die Polymerisation bei niedriger Temperatur, beispielsweise 60°C begonnen wird und die Reaktionstemperatur mit fortschreitendem Polymerisationsumsatz gesteigert wird. Auf diese Weise lässt sich beispielsweise die Forderung nach sicherem Reaktionsverlauf und hohem Polymerisationsumsatz sehr gut erfüllen. Nach der Polymerisation wird das monodisperse Perlpolymerisat mit üblichen Methoden, beispielsweise durch Filtrieren oder Dekantieren, isoliert und gegebenenfalls gewaschen.

Die Herstellung der monodispersen Perlpolymerisate mit Hilfe des Jetting Prinzipes oder des Seed-Feed-Prinzip ist aus dem Stand der Technik bekannt und z.B. in US-A 4 444 961, EP-A 0 046 535, US 4 419 245 oder WO 93/12167 beschrieben. Bevorzugt erfolgt die Herstellung der monodispersen Perlpolymerisate mit Hilfe des Jetting Prinzipes oder des Seed-Feed-Prinzip.

Bevorzugt wird in Verfahrensschritt a) ein makroporöses, monodisperses Perlpolymerisat hergestellt.
Verfahrensschritt b) kann in unterschiedlicher Art und Weise durchgeführt werden. Das Perlpolymerisat könnte z.B. zunächst vorgelegt werden und dazu eine Mischung aus den Verbindungen der Formel (I) und den Verbindungen der Formel (II), den Carbonsäurehalogeniden vermischt mit den Carbonsäuren und den Friedel-Crafts-Katalysatoren gegeben werden. Genauso könnten aber auch zunächst die Carbonsäurehalogenide vermischt mit Carbonsäuren vorgelegt werden und dann das Perlpolymerisat hinzugegeben werden und dann die Verbindungen der Formel (I) und danach die Friedel-Crafts-Katalysatoren hinzugefügt werden. Auch andere Zugabereihenfolgen sind denkbar.

Bevorzugt werden die Verbindungen der Formel (I) und die Verbindungen der Formel (II) zunächst mit den Carbonsäuren vermischt. Dann erfolgt die Zugabe der Friedel-Crafts Katalysatoren. Danach werden die Carbonsäurehalogenide hinzugegeben. Danach wird vorzugsweise erwärmt und dann vorzugsweise weitere Friedels-Crafts-Katalysatoren hinzugefügt. Vorzugsweise wird die Temperatur der Mischung danach weiter erhöht. Die Aufarbeitung der Reaktionsmischung erfolgt nach dem Fachmann bekannten Verfahren. Vorzugsweise wird das phthalimidomethylierte Perlpolymerisat abfiltriert. Vorzugsweise erfolgt die Durchführung in einem Eintopfverfahren, ohne weitere Abtrennung und Aufreinigung intermediär entstehender Reaktionsprodukte.

Die Menge an Friedel-Crafts Katalysator, die in Verfahrensschritt b) eingesetzt wird, beträgt im Allgemeinen 0,01 bis 20 mol pro Mol Verbindungen der Formel (I), kann aber auch kleiner oder größer sein. Bevorzugt werden 0,1 mol bis 5 mol Friedel-Crafts Katalysator pro Mol Verbindungen der Formel (I) eingesetzt. Besonders bevorzugt werden 1 bis 5 mol Friedel-Crafts Katalysator pro Mol Verbindungen der Formel (I) eingesetzt.

Die Menge an Carbonsäurehalogeniden, die in Verfahrensschritt b) eingesetzt wird, beträgt im Allgemeinen 0,5 bis 10 mol pro Mol Verbindungen der Formel (I), kann aber auch kleiner oder größer sein. Bevorzugt werden 1 bis 7 mol Carbonsäurehalogenide pro Mol Verbindungen der Formel (I) eingesetzt. Besonders bevorzugt werden 1 bis 4 mol Carbonsäurehalogenide pro Mol Verbindungen der Formel (I) eingesetzt. Die Menge an Carbonsäurehalogeniden, die in Verfahrensschritt b) eingesetzt wird, beträgt im Allgemeinen $10^{-5}$ mol bis 0,06 mol pro Gramm Perlpolymerisat kann aber auch kleiner oder größer sein. Bevorzugt werden von 0,001 bis 0,05 mol Carbonsäurehalogenide pro Gramm Perlpolymerisat eingesetzt.

Die Verbindungen der Formel (I) werden im Allgemeinen in einer Menge von 0,01 bis 1,0 mol pro Gramm Verbindungen der Formel (II) in Verfahrensschritt b) eingesetzt. Die Menge kann aber auch kleiner oder größer sein. Bevorzugt werden die Verbindungen der Formel (I) in einer Menge von 0,01 bis 0,05 mol pro Gramm Verbindungen der Formel (II) in Verfahrensschritt b) eingesetzt.

Es können zusätzlich auch Quellungsmittel, wie z.B. organische Lösungsmittel, wie z.B. Dichlormethan, Dichlorethan, insbesondere 1,2-Dichlorethan, Tetrachlorethan, Dichlorpropan, Pentachlorpropan, Dimethylformamid, Sulfolane, Nitropropane oder Nitrobenzol eingesetzt werden. Allerdings kann im erfindungsgemäßen Verfahren auch vollständig auf den Einsatz der Quellungsmittel verzichtet werden. Falls dennoch Quellungsmittel eingesetzt werden, ist der Gehalt von Quellungsmitteln bevorzugt in Verfahrensschritt b) kleiner als 10 Gew.% bezogen auf die Gesamtmenge der eingesetzten Edukte. Besonders bevorzugt ist der Gehalt an Quellungsmitteln kleiner als 5 Gew.% bezogen auf die Gesamtmenge der Edukte. Verfahrensschritt b) wird ganz besonders bevorzugt ohne Zusatz von Quellungsmittel durchgeführt. Vorzugsweise liegt die Temperatur bei der Verfahrensschritt b) durchgeführt wird zwischen 50 °C und 140 °C.

Die in Verfahrensschritt b) eingesetzten Verbindungen der Formel (I) und der Verbindungen der Formel (II), Perlpolymerisat, aliphatischen, gesättigten oder ungesättigten Carbonsäurehalogeniden, Friedels-Craft Katalysatoren und Carbonsäuren liegen zusammen in einer Menge größer als 96 Gew.-% in der Reaktionsmischung bezogen auf die Gesamtmenge der Reaktionsmischung vor.
In Verfahrensschritt c) erfolgt im Allgemeinen die Umsetzung des phthalimidomethylierten Perlpolymerisates zu dem aminomethylierten Perlpolymerisat mit wässrigen oder alkoholischen Lösungen eines Alkalihydroxids, wie Natriumhydroxid oder Kaliumhydroxid. Zudem wird Verfahrensschritt c) im Allgemeinen bei Temperaturen zwischen 100°C und 250°C kann aber auch bei höheren oder niedrigeren Temperaturen durchgeführt werden. Vorzugsweise wird Verfahrensschritt c) bei Temperaturen zwischen 120 °C und 190°C durchgeführt. Bevorzugt erfolgt die Umsetzung des phthalimidomethylierten, Perlpolymerisates zu dem aminomethylierten Perlpolymerisat in Verfahrensschritt c) mit Alkali- oder Erdalkalihydroxiden oder Gemischen dieser Verbindungen, besonders bevorzugt mit Alkalihydroxiden, wie insbesondere Natriumhydroxid. Bevorzugt verläuft die Umsetzung in Verfahrensschritt c) in Gegenwart einer wässrigen oder alkoholischen Lösung eines Alkalihydroxides. Die Konzentration der Natronlauge liegt im Bereich von 10 bis 50 Gew.-%, vorzugsweise 20 bis 40 Gew.-%. Das dabei entstehende aminomethylierte Perlpolymerisat wird bevorzugt mit vollentsalztem Wasser alkalifrei gewaschen, kann aber auch mit anderen wässrigen Lösungen oder nicht entsalztem Wasser behandelt werden.
Das aminomethylierte Perlpolymerisat kann als Anionenaustauscher verwendet werden oder zu Chelatharzen weiter umgesetzt werden.

Die Umsetzung der im Verfahrensschritt c) erhaltenen aminomethylierten, Perlpolymerisate zu Chelatharzen erfolgt nach gängigen, dem Fachmann bekannten Verfahren.
Z.B. kann die Herstellung von Iminodiessigsäuregruppen enthaltenen Chelatharze durch Umsetzung des aminomethylgruppenhaltigen Perlpolymerisat aus Verfahrensschritt c) in wässriger Suspension mit Chloressigsäure oder ihren Derivaten erfolgen. Ebenso ist es möglich die in Verfahrensschritt c) erhaltenen aminomethylierten Perlpolymerisate in schwefelsaurer Suspension mit Formalin in Kombination mit P-H aciden (nach modifizierter Mannich Reaktion) Verbindungen zu Chelatharzen mit Phosphonsäuregruppen umzusetzen.
Mit Hilfe des erfindungsgemäßen Verfahrens können aminomethylierte Perlpolymerisate unter hohen Ausbeuten, bezogen auf die Menge an eingeführten Aminomethylgruppen, hergestellt werden.
Die erfindungsgemäße hergestellten aminomethylierten Perlpolymerisate können als schwach basische Anionenaustauscher eingesetzt werden oder zu Chelatharzen umgesetzt werden.
Zudem kann auf die Verwendung von toxischen, chlorierten, organischen Lösungsmitteln im erfindungsgemäßen Verfahren verzichtet werden.

## Bestimmung der Menge an basischen Aminomethylgruppen im aminomethylierten Perlpolymerisat

100 ml des aminomethylierten Perlpolymerisates werden auf dem Stampfvolumeter eingerüttelt und anschließend mit voll entsalztem Wasser in eine Glassäule gespült. In 1 Stunde und 40 Minuten werden 1000 ml 2 Gew. % ige wässrige Natronlauge überfiltriert. Anschließend wird voll entsalztes Wasser überfiltriert bis 100 ml Eluat mit Phenolphthalein versetzt einen Verbrauch von höchstens 0,05 ml haben. 50 ml des Harzes werden in einem Becherglas mit 50 ml voll entsalztes Wasser und 100 ml 1 N Salzsäure versetzt.
Die Suspension wird 30 Minuten gerührt und anschließend in eine Glassäule gefüllt. Die Flüssigkeit wird abgelassen. Es werden weiter 100 ml 1 N Salzsäure über das Harz in 20 Minuten filtriert. Anschließend werden 200 ml Methanol überfiltriert. Alle Eluate werden gesammelt und vereinigt und mit 1 N Natronlauge gegen Methylorange titriet.
Die Menge an Aminomethylgruppen in 1 Liter aminomethyliertem Perlpolymerisat errechnet sich nach folgender Formel :

$$(200\ V)*20 = \text{mol Aminomethylgruppen pro Liter aminomethyliertes Perlpolymerisat.}$$

## Beispiele

## Beispiel 1

1.1 Herstellung eines monodispersen, makroporösen Perlpolymerisates auf der Basis von Styrol, Divinylbenzol und Ethylstyrol

In einem 10 l Glasreaktor werden 3000 g vollentsalztes Wasser vorgelegt und eine Lösung aus 10 g Gelatine, 16 g di-Natriumhydrogenphosphatdodekahydrat und 0,73 g Resorcin in 320 g entionisiertem Wasser hinzugefüllt und durchmischt. Die Mischung wird auf 25 °C temperiert. Unter Rühren wird anschließend eine Mischung aus 3200 g mikroverkapselter Monomertröpfchen mit enger Teilchengrössenverteilung aus 3,6 Gew.-% Divinylbenzol und 0,9 Gew.-% Ethylstyrol (eingesetzt als handelsübliches Isomerengemisch aus Divinylbenzol und Ethylstyrol mit 80 % Divinylbenzol), 0,5 Gew.-% Dibenzoylperoxid, 56,2 Gew.-% Styrol und 38,8 Gew.-% Isododekan gegeben, wobei die Mikrokapsel aus einem mit Formaldehyd gehärteten Komplexkoazervat aus Gelatine und einem Copolymer aus Acrylamid und Acrylsäure besteht, und 3200 g wässriger Phase mit einem pH-Wert von 12 zugesetzt.
Der Ansatz wird unter Rühren durch Temperaturerhöhung nach einem Temperaturprogramm bei 25°C beginnend und bei 95°C endend auspolymerisiert. Der Ansatz wird abgekühlt, über ein 32 μm-Sieb gewaschen und anschließend im Vakuum bei 80°C getrocknet. Man erhält 1893 g eines kugelförmigen Polymerisates mit enger Teilchengrößenverteilung.

1.2 Herstellung eines phthalimidomethylierten Perlpolymers mit Schwefelsäure als Friedel-Crafts-Katalysator

Bei Raumtemperatur werden 316 g Essigsäure in einem Rundkolben vorgelegt. Dazu werden 62,8 g Paraformaldehyd und 286,9 g Phthalimid gegeben. Anschließend werden 9,6 g Schwefelsäure (100%-ig) zu der Suspension getropft, die Mischung auf 70°C aufgeheizt und bei dieser Temperatur für 1 Stunde gerührt. Anschließend werden 180 g Acetylchlorid innerhalb von 0,5 Stunden zugetropft. Danach werden 159,2 g monodisperses Perlpolymerisat aus Beispiel 1.1 zugegeben und anschließend innerhalb von 2 Stunden 277,3 g Schwefelsäure (100%-ig) zudosiert. Die Suspension wird auf 115°C aufgeheizt und weitere 10 Stunden bei dieser Temperatur gerührt. Der Ansatz wird auf 70°C abgekühlt und die Perlen auf einem Sieb abgetrennt. Anschließend werden die Perlen zweimal bei 70°C mit Essigsäure und dreimal bei 70°C mit vollentsalztem Wasser gewaschen.
Volumenausbeute: 990 ml

Stickstoffgehalt (nach Trocknung): 5,4%

1.3 Herstellung eines phthalimidomethylierten Perlpolymers mit Schwefelsäure als Friedel-Crafts-Katalysator

Bei Raumtemperatur werden 176 g Essigsäure und 203 g Acetylchlorid in einem Rundkolben vorgelegt. Dazu werden 159,2 g monodisperses Perlpolymerisat aus Beispiel 1.1 zugegeben und 30 min bei Raumtemperatur gerührt. Anschließend trägt man 286,9 g Phthalimid und 62,8 g Paraformaldehyd ein und lässt weitere 30 min rühren. Man heizt auf 60°C auf und tropft 286,9 g Schwefelsäure (100%-ig) innerhalb von 2 h zu. Die Temperatur wird auf 115°C erhöht und es wird anschließend weitere 10 h bei dieser Temperatur gerührt. Der Ansatz wird auf 70°C abgekühlt und die Perlen auf einem Sieb abgetrennt. Anschließend werden die Perlen zweimal bei 70°C mit Essigsäure und dreimal bei 70°C mit vollentsalztem Wasser gewaschen.
Volumenausbeute: 1045 ml
Stickstoffgehalt (nach Trocknung): 5,4%

1.4 Herstellung eines aminomethylgruppenhaltigen monodispersen, makroporösen

Perlpolymerisates

722 g voll entsalztes Wasser und 384 g 50 Gew.%-ige wässrige Natronlauge werden bei Raumtemperatur vorgelegt. Dazu werden 800 ml phthalimidomethyliertes Perlpolymerisat aus Beispiel 1.2 dosiert. Die Suspension wird im Autoklav unter Rühren in 2 Stunden auf 180°C erhitzt und weitere 8 Stunden bei dieser Temperatur gerührt. Nach dem Abkühlen wird die Suspension auf ein Sieb gegeben. Das erhaltene aminomethylierte Perlpolymerisat wird mit voll entsalztem Wasser gewaschen .
Volumenausbeute : 635 ml
HCl - Zahl : 2,01 mol/ Liter Harz

Vergleichsbeispiel 1 (nicht erfindungsgemäß)

Bei Raumtemperatur werden 234 g Essigsäure in einem Rundkolben vorgelegt. Dazu werden 62,8 g Paraformaldehyd und 286,9 g Phthalimid gegeben. Anschließend werden 10 g Schwefelsäure (100%-ig) zu der Suspension getropft, die Mischung auf 70°C aufgeheizt und bei 70°C für 1 Stunde gerührt. Anschließend werden 199 g Acetanhydrid innerhalb von 0,5 Stunden zugetropft. Danach werden 159 g monodisperses Perlpolymerisat aus Beispiel 1.1 zugegeben und anschließend innerhalb von 2 Stunden 372,9 g Schwefelsäure (100%-ig) zudosiert. Die Suspension wird auf 115°C aufgeheizt und weitere 10 Stunden bei dieser Temperatur gerührt. Es wird auf 70°C abgekühlt und die Perlen auf einem Sieb abgetrennt. Anschließend werden die Perlen zweimal bei 70°C mit Essigsäure und dreimal bei 70°C mit vollentsalztem Wasser gewaschen.
Volumenausbeute: 855 ml
Stickstoffgehalt (nach Trocknung): 5,1%

## Patentansprüche

1. Verfahren zur Herstellung von aminomethylierten Perlpolymerisaten, **dadurch gekennzeichnet, dass**

    a) Monomertröpfchen aus einem Gemisch enthaltend mindestens eine monovinylaromatische Verbindung, mindestens eine polyvinylaromatische Verbindung, mindestens einen Initiator zu einem Perlpolymerisat umgesetzt werden und
    b) das Perlpolymerisat aus Schritt a) mit mindestens einer Verbindung der Formel

    (I) oder deren Salze

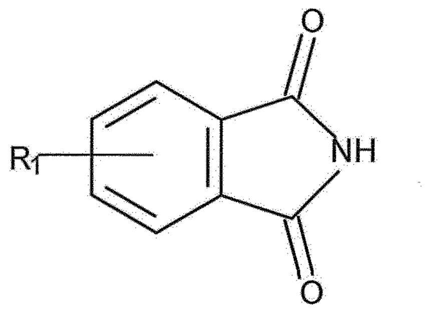

(I)

wobei $R_1$ = $C_1$-$C_3$-Alkyl oder H bedeutet und mindestens einer Verbindung der Formel (II) oder deren zyklischen Kondensate

$$HO-[CH_2-O]_n-H \quad (II)$$

wobei n = 2 bis 100 ist,
in Gegenwart von zumindest einem aliphatischen, gesättigten oder ungesättigten Carbonsäurehalogeniden und in Gegenwart von zusätzlichen aliphatischen, gesättigten oder ungesättigten Carbonsäuren und in Gegenwart von zumindest einem Friedel-Crafts Katalysator, wobei die eingesetzten Mengen der Verbindungen der Formel (I), der Verbindungen der Formel (II), des Perlpolymerisats, der aliphatischen, gesättigten oder ungesättigten Carbonsäurehalogenide, der Friedel-Crafts Katalysatoren und der Carbonsäuren zusammen in einer Menge größer als 96 Gew.-% in der Reaktionsmischung bezogen auf die Gesamtmenge der Reaktionsmischung vorliegen, zu einem phthalimidomethylierten Perlpolymerisat umgesetzt wird und

c) das phthalimidomethylierte Perlpolymerisat aus Schritt b.) zu einem aminomethylierten Perlpolymerisat hydrolysiert wird.

2. Verfahren gemäß Anspruch 1, **dadurch gekennzeichnet, dass** in Verfahrensschritt a) als monovinylaromatische Verbindung Styrol, $\alpha$-Methylstyrol, Vinyltoluol, Ethylstyrol, t-Butylstyrol, Chlorstyrol, Bromstyrol, Chlormethylstyrol oder Vinylnaphthalin oder Mischungen dieser Verbindungen eingesetzt werden.

3. Verfahren gemäß Anspruch 1 oder 2, **dadurch gekennzeichnet, dass** in Verfahrensschritt a) als polyvinylaromatische Verbindung Divinylbenzol, Divinyltoluol oder Trivinylbenzol oder Mischungen dieser Verbindungen eingesetzt werden.

4. Verfahren gemäß mindestens einem der Ansprüche 1 bis 3, **dadurch gekennzeichnet, dass** als eine monovinylaromatische Verbindung Styrol und als polyvinylaromatische Verbindung Divinylbenzol eingesetzt werden.

5. Verfahren gemäß mindestens einem der Ansprüche 1 bis 4, **dadurch gekennzeichnet, dass** $R_1$ = H in der Verbindung der Formel (I) ist.

6. Verfahren gemäß mindestens einem der Ansprüche 1 bis 5, **dadurch gekennzeichnet, dass** n = 8 bis 30 in der Verbindung der Formel (II) ist.

7. Verfahren gemäß mindestens einem der Ansprüche 1 bis 6, **dadurch gekennzeichnet, dass** in Verfahrensschritt b) als Carbonsäurehalogenide aliphatische und gesättigte Monocarbonsäurechloride oder/und -bromide eingesetzt werden, die bei Temperaturen zwischen 10 °C und 60 °C flüssig sind.

8. Verfahren gemäß mindestens einem der Ansprüche 1 bis 7, **dadurch gekennzeichnet, dass** in Schritt b) Essigsäurechlorid und Essigsäure als Mischung eingesetzt werden.

9. Verfahren gemäß Anspruch 8, **dadurch gekennzeichnet, dass** das Verhältnis Essigsäurechlorid zu Essigsäure zwischen 1 : 1 bis 1 : 10 liegt.

**10.** Verfahren gemäß mindestens einem der Ansprüche 1 bis 9, **dadurch gekennzeichnet, dass** der Friedel-Crafts Katalysator in Schritt b) in einer Menge von 1 bis 5 mol pro Mol der Verbindung der Formel (I) eingesetzt werden.

**11.** Verfahren gemäß mindestens einem der Ansprüche 1 bis 10, **dadurch gekennzeichnet, dass** Carbonsäurehalogenide in Verfahrensschritt b) in einer Menge von 0,001 bis 0,05 mol pro Gramm Perlpolymerisat eingesetzt werden.

**12.** Verfahren gemäß mindestens einem der Ansprüche 1 bis 11, **dadurch gekennzeichnet, dass** das Carbonsäurenhalogenid in einer Menge von 1 bis 4 mol pro Mol Verbindungen der Formel (I) in Verfahrensschritt b) eingesetzt werden.

**13.** Verfahren gemäß mindestens einem der Ansprüche 1 bis 12, **dadurch gekennzeichnet, dass** die Verbindungen der Formel (I) in einer Menge von 0,01 bis 0,05 mol pro Gramm der Verbindungen der Formel (II) in Verfahrensschritt b) eingesetzt werden.

**14.** Verfahren gemäß mindestens einem der Ansprüche 1 bis 13, **dadurch gekennzeichnet**, das in Schritt a) die Umsetzung in Gegenwart von mindestens einem Porogen erfolgt.

## Claims

**1.** Process for preparing aminomethylated bead polymers, **characterized in that**

a) monomer droplets composed of a mixture comprising at least one monovinylaromatic compound, at least one polyvinylaromatic compound and at least one initiator are converted to a bead polymer and
b) the bead polymer from step a) is reacted with at least one compound of the formula (I) or salts thereof

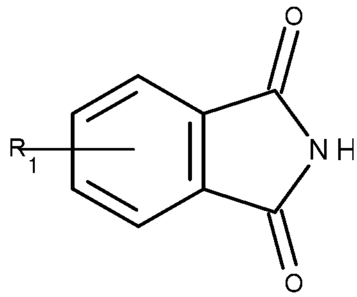

(I)

where $R_1 = C_1$-$C_3$-alkyl or H and at least one compound of the formula (II) or the cyclic condensates thereof

$$HO-[CH_2-O]_n-H \quad (II)$$

where n = 2 to 100,
in the presence of at least one aliphatic saturated or unsaturated carbonyl halide and in the presence of additional aliphatic saturated or unsaturated carboxylic acids, and
in the presence of at least one Friedel-Crafts catalyst, wherein the amounts of the compounds of the formula (I), the compounds of the formula (II), the bead polymer, the aliphatic saturated or unsaturated carbonyl halides, the Friedel-Crafts catalysts and the carboxylic acids used together are present in an amount greater than 96% by weight in the reaction mixture, based on the total amount of the reaction mixture,
to give a phthalimidomethylated bead polymer, and
c) the phthalimidomethylated bead polymer from step b.) is hydrolysed to give an aminomethylated bead polymer.

**2.** Process according to Claim 1, **characterized in that**, in process step a), monovinylaromatic compounds used are styrene, $\alpha$-methylstyrene, vinyltoluene, ethylstyrene, t-butylstyrene, chlorostyrene, bromostyrene, chloromethylstyrene or vinylnaphthalene or mixtures of these compounds.

**3.** Process according to Claim 1 or 2, **characterized in that**, in process step a), polyvinylaromatic compounds used

are divinylbenzene, divinyltoluene or trivinylbenzene or mixtures of these compounds.

4. Process according to at least one of Claims 1 to 3, **characterized in that** a monovinylaromatic compound used is styrene and a polyvinylaromatic compound used is divinylbenzene.

5. Process according to at least one of Claims 1 to 4, **characterized in that** $R_1$ = H in the compound of the formula (I).

6. Process according to at least one of Claims 1 to 5, **characterized in that** n = 8 to 30 in the compound of the formula (II).

7. Process according to at least one of Claims 1 to 6, **characterized in that** carbonyl halides used in process step b) are aliphatic and saturated monocarbonyl chlorides or/and bromides that are liquid at temperatures between 10°C and 60°C.

8. Process according to at least one of Claims 1 to 7, **characterized in that** acetyl chloride and acetic acid are used as a mixture in step b).

9. Process according to Claim 8, **characterized in that** the ratio of acetyl chloride to acetic acid is between 1:1 to 1:10.

10. Process according to at least one of Claims 1 to 9, **characterized in that** the Friedel-Crafts catalyst is used in step b) in an amount of 1 to 5 mol per mole of the compound of the formula (I).

11. Process according to at least one of Claims 1 to 10, **characterized in that** carbonyl halides are used in process step b) in an amount of 0.001 to 0.05 mol per gram of bead polymer.

12. Process according to at least one of Claims 1 to 11, **characterized in that** the carbonyl halide is used in an amount of 1 to 4 mol per mole of compounds of the formula (I) in process step b).

13. Process according to at least one of Claims 1 to 12, **characterized in that** the compounds of the formula (I) are used in an amount of 0.01 to 0.05 mol per gram of the compounds of the formula (II) in process step b).

14. Process according to at least one of Claims 1 to 13, **characterized in that** the reaction is carried out in the presence of at least one porogen in step a).

## Revendications

1. Procédé de fabrication de polymères en perles aminométhylés, **caractérisé en ce que**

a) des gouttelettes de monomères d'un mélange contenant au moins un composé monovinyle aromatique, au moins un composé polyvinyle aromatique, au moins un initiateur sont mises en réaction pour former un polymère en perles, et
b) le polymère en perles de l'étape a) est mis en réaction avec au moins un composé de la formule (I) ou ses sels

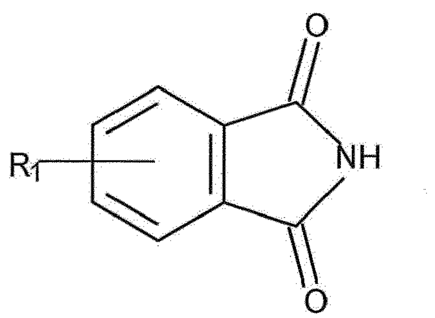

(I)

dans laquelle $R_1$ = alkyle en $C_1$-$C_3$ ou H, et au moins un composé de la formule (II) ou ses condensats cycliques

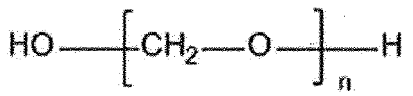 (II)

avec n = 2 à 100,

en présence d'au moins un halogénure d'acide carboxylique aliphatique, saturé ou insaturé, et en présence d'acides carboxyliques aliphatiques, saturés ou insaturés supplémentaires, et

en présence d'au moins un catalyseur de Friedel-Crafts, les quantités utilisées des composés de la formule (I), des composés de la formule (II), du polymère en perles, des halogénures d'acides carboxyliques aliphatiques, saturés ou insaturés, des catalyseurs de Friedel-Crafts et des acides carboxyliques ensemble étant présentes en une quantité supérieure à 96 % en poids dans le mélange réactionnel, par rapport à la quantité totale du mélange réactionnel,

pour former un polymère en perles phtalimidométhylé, et

c) le polymère en perles phtalimidométhylé de l'étape b) est hydrolysé en un polymère en perles aminométhylé.

**2.** Procédé selon la revendication 1, **caractérisé en ce qu'**à l'étape de procédé a), du styrène, de l'$\alpha$-méthylstyrène, du vinyltoluène, de l'éthylstyrène, du t-butylstyrène, du chlorostyrène, du bromostyrène, du chlorométhylstyrène ou de la vinylnaphtaline ou des mélanges de ces composés sont utilisés en tant que composé monovinyle aromatique.

**3.** Procédé selon la revendication 1 ou 2, **caractérisé en ce qu'**à l'étape de procédé a), du divinylbenzène, du divinyltoluène ou du trivinylbenzène ou des mélanges de ces composés sont utilisés en tant que composé polyvinyle aromatique.

**4.** Procédé selon au moins l'une quelconque des revendications 1 à 3, **caractérisé en ce que** du styrène est utilisé en tant que composé monovinyle aromatique et du divinylbenzène en tant que composé polyvinyle aromatique.

**5.** Procédé selon au moins l'une quelconque des revendications 1 à 4, **caractérisé en ce que** $R_1$ = H dans le composé de la formule (I).

**6.** Procédé selon au moins l'une quelconque des revendications 1 à 5, **caractérisé en ce que** n = 8 à 30 dans le composé de la formule (II).

**7.** Procédé selon au moins l'une quelconque des revendications 1 à 6, **caractérisé en ce qu'**à l'étape b), des chlorures et/ou bromures d'acides monocarboxyliques aliphatiques et saturés, qui sont liquides à des températures comprises entre 10 °C et 60 °C, sont utilisés en tant qu'halogénures d'acides carboxyliques.

**8.** Procédé selon au moins l'une quelconque des revendications 1 à 7, **caractérisé en ce que** du chlorure de l'acide acétique et de l'acide acétique en mélange sont utilisés à l'étape b).

**9.** Procédé selon la revendication 8, **caractérisé en ce que** le rapport entre le chlorure de l'acide acétique et l'acide acétique est compris entre 1:1 et 1:10.

**10.** Procédé selon au moins l'une quelconque des revendications 1 à 9, **caractérisé en ce que** le catalyseur de Friedel-Crafts à l'étape b) est utilisé en une quantité de 1 à 5 moles par mole du composé de la formule (I).

**11.** Procédé selon au moins l'une quelconque des revendications 1 à 10, **caractérisé en ce que** des halogénures d'acides carboxyliques sont utilisés à l'étape de procédé b) en une quantité de 0,001 à 0,05 mole par gramme de polymère en perles.

**12.** Procédé selon au moins l'une quelconque des revendications 1 à 11, **caractérisé en ce que** l'halogénure d'acide carboxylique est utilisé en une quantité de 1 à 4 moles par mole de composés de la formule (I) à l'étape de procédé b).

**13.** Procédé selon au moins l'une quelconque des revendications 1 à 12, **caractérisé en ce que** les composés de la formule (I) sont utilisés en une quantité de 0,01 à 0,05 mole par gramme de composés de la formule (II) à l'étape de procédé b).

**14.** Procédé selon au moins l'une quelconque des revendications 1 à 13, **caractérisé en ce qu'**à l'étape a), la réaction

a lieu en présence d'au moins un porogène.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- EP 1078688 A
- US 4952608 B
- US 4232125 A
- US 3989650 B
- US 4382124 A
- EP 0046535 A
- US 4444961 A
- US 4419245 A
- WO 9312167 A

### In der Beschreibung aufgeführte Nicht-Patentliteratur

- *Farbenfabriken Bayer DBP 1045102,* 1957
- *DBP 1113570,* 1957